# EUROPÄISCHE PATENTSCHRIFT

(11) **EP 3 523 096 B1**
(45) Veröffentlichungstag und Bekanntmachung des Hinweises auf die Patenterteilung: **30.12.2020**
(21) Anmeldenummer: 17781082.7
(22) Anmeldetag: 05.10.2017
(51) Int. Cl.: B25F 5/00, B25B 27/10

(54) **ARBEITSWERKZEUG**
WORKING TOOL
OUTIL DE TRAVAIL

(30) Priorität: 07.10.2016 DE 102016119050; 07.06.2017 DE 102017112480
(43) Veröffentlichungstag der Anmeldung: 14.08.2019
(73) Patentinhaber: Gustav Klauke GmbH, 42855 Remscheid (DE)
(72) Erfinder: FRENKEN, Egbert, 52525 Heinsberg (DE); LEHR, Andreas, D-41468 Neuss (DE)
(74) Vertreter: Müller, Enno
(86) Internationale Anmeldenummer: PCT/EP2017/075333
(87) Internationale Veröffentlichungsnummer: WO 2018/065513

(56) Entgegenhaltungen:
- DE-A1-102005 047 353
- DE-A1-102013 007 869
- DE-U1- 20 113 238

## Beschreibung

### Gebiet der Technik

Die Erfindung betrifft ein Arbeitswerkzeug nach den Merkmalen des Oberbegriffes des Anspruches 1.

Die Erfindung betrifft weiter ein hydraulisches Arbeitswerkzeug mit einem Arbeitskopf und einem Rumpfgerät, wobei der Arbeitskopf einen Hydraulikzylinder mit einem Hydraulikkolben aufweist, der zwischen einer Einfahrstellung und einer Ausfahrstellung in einer Verfahrrichtung verfahrbar ist, wobei darüber hinaus in dem Rumpfgerät eine Hydraulikmittelpumpe und ein Antrieb für die Hydraulikmittelpumpe vorgesehen ist, siehe auch Oberbegriff des Anspruches 7.

### Stand der Technik

Arbeitswerkzeuge der in Rede stehenden Art sind bekannt, beispielsweise in Form hydraulischer Arbeitswerkzeuge, beispielsweise zum Schneiden verhältnismäßig dicker Drähte oder zum Stanzen oder zum Schneiden von beispielsweise Blechen. Hier wird beispielsweise auf die WO 2003/084719 A2 (US 7,412,868 B2) verwiesen. Hierbei kann über das Hydraulikmittel, hervorgerufen durch einen Gegendruck von Schneiden oder Stanzbacken, ein Druck von 300 bar und mehr bis hin zu bspw. 600 bar oder 800 bar in dem Beaufschlagungsraum erzeugt werden.

Darüber hinaus sind auch rein mechanisch arbeitende Arbeitswerkzeuge, beispielsweise unter Nutzung eines Spindeltriebs, bekannt. Hier wird beispielsweise auf die WO 2014/009363 A1 (US 2015/0251256 A1) verwiesen.

Aus der DE 10 2005 047 353 A1 ist eine Elektrowerkzeugmaschine bekannt mit einer Dämpfungseinrichtung, die bei einer in beide möglichen axialen Richtungen gegebenen Bewegung eine Dämpfung zwischen dem Elektromotor und dem Getriebe erzeugt. Weiter ist zum Stand der Technik die DE 20113 238 U1 anzuführen. Hieraus ist ein hydraulisches Arbeitswerkzeug mit einem Arbeitskopf und einem Rumpfgerät bekannt, wobei der Arbeitskopf einen Hydraulikzylinder mit einem Hydraulikkolben aufweist, der zwischen einer Einfallstellung und einer Ausfallstellung in einer Verfahrrichtung verfahrbar ist. Darüber hinaus ist in dem Rumpfgerät eine Hydraulikmittelpumpe und ein Antrieb für eine Hydraulikmittelpumpe vorgesehen. Diese Druckschrift zeigt den Ausgangspunkt der Erfindung gemäß Anspruch 7.

Schließlich ist aus der DE 10 2013 007 869 A1 ein Stützfuß eines Fahrzeuges mit Ausleger bekannt, wobei der Stützfuß einen Hydraulikzylinder aufweist, der mittels einer Feder auf einen Deckel eines Außenrohres, in welchem der Hydraulikzylinder wirkt, einwirkt.

Ausgehend von einem Stand der Technik gemäß der DE 10 2005 047 353 A1 stellt sich die Erfindung die Aufgabe, ein Arbeitswerkzeug wie eingangs vorausgesetzt beziehungsweise ein hydraulisches Arbeitswerkzeug wie eingangs vorausgesetzt anzugeben, das hinsichtlich möglicherweise auftretender Druckstöße vorteilhaft ausgebildet ist.

Diese Aufgabe ist beim Gegenstand des Anspruches 1 gelöst, wobei darauf abgestellt ist, dass in einer unbeeinflussten Grundstellung in einem Gehäuseboden eines Gehäuses des Getriebes anschlagbegrenzt an einer Decke eines Gehäuses des Elektromotors anliegt, dass eine Antriebswelle des Elektromotors die Decke sowie den Boden zum Eingriff in den Getriebebereich durchsetzt, dass die Verbindung durch einen in einem der Teile verankerten Zapfen gegeben ist, gegenüber welchem das andere Teil anschlagbegrenzt beweglich ist, wobei das Getriebe an dem den Boden durchsetzenden Zapfen in Längsrichtung der Achse geführt ist, und dass die Beweglichkeit gegen eine Federkraft einer Feder gegeben ist..

Diese Aufgabe ist weiter beim Gegenstand des Anspruches 7 gelöst, wobei darauf abgestellt ist, dass der Hydraulikzylinder in der Verfahrrichtung anschlagbegrenzt an dem Rumpfgerät angebracht ist.

### Zusammenfassung der Erfindung

Im Hinblick auf den bekannten Stand der Technik beschäftigt sich die Erfindung mit der Aufgabenstellung, ein Arbeitswerkzeug der in Rede stehenden Art weiter verbessert auszubilden.

Eine mögliche Lösung der Aufgabe ist nach einem ersten Erfindungsgedanken bei einem Arbeitswerkzeug dadurch gegeben, dass das Getriebe mit dem Elektromotor in Richtung der Längsachse anschlagbegrenzt beweglich verbunden ist.

Im Zuge des Druckaufbaues, etwa bei einer Ausgestaltung des Arbeitswerkzeuges als Schneidgerät, bewegt sich der Arbeitskopf, bei einem hydraulischen Werkzeug einschließlich des Hydraulikzylinders, relativ zu dem Rumpfgerät entlang der geometrischen Längsachse der Antriebswelle beziehungsweise -spindel oder in Verfahrrichtung des Hydraulikkolbens. Mit Durchtrennung des Schneidteiles bzw. mit Eintritt eines möglichen Sprödbruches des Schneidteiles vollzieht das Antriebsmittel (beispielsweise die Spindel oder der Hydraulikkolben) zusammen mit dem daran befestigten, verfahrbaren Werkzeug (Schneidstempel) aufgrund des hohen zuvor wirkenden Druckes eine plötzliche Bewegung in Verfahrrichtung hin auf das gegenüberliegende feststehende Werkzeug (Schneidstempel). Hierbei kann und darf es zu einem Zusammenprall der Werkzeuge, insbesondere Schneidwerkzeuge kommen.

Auch kann es hierbei bei hydraulischen Arbeitswerkzeugen aufgrund der Entspannung des Hydraulikmittels zu einer Bewegungstendenz des Hydraulikzylinders in Richtung auf das Rumpfgerät, d.h. in eine Richtung entgegen der Verfahrrichtung kommen. Der Hydraulikzylinder kann schließlich zum Anschlag an die entsprechend zugewandte Fläche des Rumpfgerätes kommen.

Zufolge der anschlagbegrenzt beweglichen Verbindung zwischen Getriebe und Elektromotor, wobei das Getriebe ein mechanisches Getriebe, beispielsweise ein Zahnradgetriebe, wie weiter beispielsweise ein Planetengetriebe sein kann, darüber hinaus aber auch ein Getriebe in Form einer Hydraulikpumpe, sind schlagartige Krafteinwirkungen, wie diese beispielsweise bei einem Sprödbruch im Zuge eines Schneidvorganges auftreten können, abgefangen. Diese werden bevorzugt nicht, zumindest nicht im vollem, die Funktion des Elektromotors gegebenenfalls beeinträchtigendem Maß weitergeleitet.

Die Ausgestaltung hinsichtlich des hydraulischen Arbeitswerkzeuges kann bevorzugt derart vorgenommen sein, insbesondere im Hinblick auf die bewegbaren Massen des Kolbens mit dem Arbeitswerkzeug, wie bspw. dem Schneidstempel, einerseits, und dem Hydraulikzylinder und ggf. damit weiterer verbundener Teile, wie etwa ein Gegenwerkzeug, andererseits, dass sichergestellt ist, dass bei einem Wegfall der Gegenkraft (im Falle des Schneidwerkzeuges bei bspw. einsetzendem Sprödbruch des Schneidgutes) der Zusammenstoß zwischen dem Kolben und einem diesbezüglichen Anschlag beziehungsweise zwischen dem Werkzeug und dem Gegenwerkzeug, zeitlich vor einem Anschlag des Zylinders an dem Rumpfgerät beziehungsweise einem Anschlag des Getriebes an dem Elektromotor erfolgt.

Zufolge zumindest einer der vorgeschlagenen Lösungen lässt sich beispielsweise im Moment der Durchtrennung bzw. des Sprödbruches des Schneidteiles so viel Energie abbauen, dass es nicht mehr zu wesentlichen Beeinträchtigungen, etwa des Antriebs für die Hydraulikmittelpumpe oder des Antriebs einer Spindel oder dergleichen, kommen kann.

Die Verbindung zwischen dem Getriebe und dem Elektromotor ist gemäß einer Lösung durch einen in einem der Teile (also Getriebe oder Elektromotor) verankerten Zapfen gegeben sein, gegenüber welchem das andere Teil anschlagbegrenzt schiebebeweglich, ist. Der Zapfen ist hierbei zugleich eine Führung im Zuge der Verlagerung .

Die Anschlagbegrenzung kann zum einen gegeben sein zufolge unmittelbarem Anschlagen der Teile gegeneinander. Auch kann ein Anschlag gegeben sein durch Ausbildung einer kopfartigen Radialerweiterung des Zapfens, gegen welchen Kopf das relativ zu dem verankerten Zapfen bewegliche Teil in einer Verlagerungsstellung unmittelbar oder mittelbar treten kann.

Die Bewegbarkeit des einen Teils gegenüber dem anderen Teil kann gegen Federkraft gegeben sein. Entsprechend ist einerseits eine selbsttätige Rückverlagerung in eine bevorzugt anschlagbegrenzte Grundstellung der beiden Teile zueinander zufolge Federkrafteinwirkung möglich. Darüber hinaus ist hierdurch die Verlagerung des einen Teils gegenüber dem anderen Teil zufolge Federkrafteinwirkung gedämpft.

Die Feder kann zwischen einem Zapfenkopf und einem Gehäuse eines der Teile wirken. Der Zapfenkopf ist in diesem Fall im Bereich des der Verankerung gegenüberliegenden Endes des Zapfens ausgeformt.

In einer möglichen Ausgestaltung ist der Zapfen, wie auch bevorzugt, eine Schraube. Die Verankerung erfolgt entsprechend durch Einschrauben in einen Gehäuseabschnitt des einen Teiles. Der Schraubenkopf bietet eine Abstützschulter für die Feder.

Die Beweglichkeit des Getriebes relativ zu dem Elektromotor in Richtung der Längsachse kann über einen Verlagerungsweg von wenigen Zehntelmillimetern bis hin zu wenigen Millimetern, so beispielsweise bis hin zu 5 Zehntelmillimetern oder 1 bis 2 mm, gegebenenfalls bis hin zu 5 mm oder mehr, gegeben sein.

In einer weiter möglichen Ausgestaltung des Arbeitswerkzeuges können die Hydraulikmittelpumpe und/oder der Antrieb für die Hydraulikmittelpumpe in dem Rumpfgerät in Hintereinanderanordnung vorgesehen sein, wobei der Hydraulikzylinder in Richtung der Hintereinanderanordnung bewegbar ist. Die Hintereinanderanordnung von Hydraulikmittelpumpe und Antrieb definiert die Ausrichtung einer geometrischen Achse. In Erstreckungsrichtung dieser Achse kann die Bewegungsrichtung des Hydraulikzylinders gegeben sein. In einer möglichen, zugleich auch bevorzugten, Ausgestaltung ist die Bewegungsrichtung des Hydraulikzylinders gleichgerichtet zu der Verfahrrichtung des Hydraulikkolbens zwischen einer Einfahrstellung und einer Ausfahrstellung.

Der Hydraulikzylinder kann in der Verfahrrichtung 1 mm oder mehr bewegbar sein, bspw. bis hin zu 5 oder 10 mm, weiter bis hin zu 20 mm oder mehr.

Der Arbeitskopf mit dem Hydraulikzylinder und dem Hydraulikkolben kann in Verfahrrichtung bewegbar, jedoch zumindest nicht im Rahmen einer üblichen Nutzung des Arbeitswerkzeuges von dem Rumpfgerät lösbar angeordnet sein. In einer alternativen Ausgestaltung hingegen ist eine betrieblich lösbare Verbindung zwischen dem Arbeitskopf und dem Rumpfgerät ermöglicht, bspw. zufolge einer Schraub- oder Steckverbindung. Die Verbindungsstellung kann gesichert sein, bspw. rastgesichert. Der Hydraulikzylinder als Bestandteil des Arbeitskopfes kann so ausgebildet sein, dass dieser nach Entfernung der arbeitskopfseitigen Werkzeuge und Kolben am Rumpfgerät verbleibt.

Der Hydraulikzylinder kann einen sich vom Zylinderboden entgegengesetzt zu der Zylinderwandung erstreckenden Verbindungsfortsatz aufweisen, mit welchem der Hydraulikzylinder - und somit bevorzugt der gesamte Arbeitskopf - bewegbar in einer adapterteilartigen Verbindungsaufnahme des Rumpfgerätes aufgenommen ist. Der Verbindungsfortsatz kann fest und somit nicht relativ verlagerbar zu dem Hydraulikzylinder an dem Hydraulikzylinder befestigt sein, weiter bspw. einstückig und materialeinheitlich mit diesem ausgebildet sein.

In einer möglichen Ausgestaltung ist der Verbindungsfortsatz in seiner Längserstreckung, d.h. bevorzugt in Verfahrrichtung, durchsetzt von einem Hydraulikmittel-Kanal zur Förderung von Hydraulikmittel über die Verbindungsaufnahme und den Kanal in den Zylinderraum zur Beaufschlagung des Hydraulikkolbens. Der Kanal kann sich zentral, bspw. entlang einer geometrischen Mittelachse des Verbindungsfortsatzes erstrecken.

Die Verbindungsaufnahme kann entsprechend einen Hydraulikraum ausbilden, in welchen die Hydraulikmittelpumpe liefern kann.

Der Verbindungsfortsatz kann eine Dichtung in dem Rumpfgerät durchsetzen, zum dichtenden Verschluss des aufnahmeseitigen Hydraulikraumes. Im Zuge eines Arbeitsvorganges, insbesondere im Moment der Durchtrennung des Schneidteiles, kann sich eine Relativverlagerung des Hydraulikzylinders mit dessen Verbindungsfortsatz relativ zu der Verbindungsaufnahme und somit auch relativ zu der Dichtung ergeben. Die Dichtung ist entsprechend zur Ermöglichung dieser Relativbewegung ausgelegt.

Der Verbindungsfortsatz ist - gesehen von dem Hydraulikzylinder - jenseits der hinsichtlich ihrer Position bevorzugt nicht verlagerbaren Dichtung mit einem Formschlussvorsprung ausgebildet. Dieser Formschlussvorsprung erstreckt sich bevorzugt in dem sich in der Verbindungsaufnahme ausbildenden Hydraulikraum. Über den Formschlussvorsprung kann eine Anschlagbegrenzung des Hydraulikzylinders in Verfahrrichtung gegeben sein, bspw. und auch bevorzugt in der nach außen gerichteten Verfahrrichtung.

Weiter kann der Formschlussvorsprung durch eine Querschnittserweiterung gegenüber dem Verbindungsfortsatz gegeben sein, so weiter bspw. durch Anordnung einer Schraubmutter oder einer sogenannten Klauenmutter.

Auch kann hierdurch eine unverlierbare Halterung des Hydraulikzylinders an der Verbindungsaufnahme gegeben sein, welche Verbindungsaufnahme wiederum betrieblich nicht lösbar in dem Rumpfgerät gehaltert sein kann.

Der Hydraulikzylinder kann gemäß einer möglichen Ausgestaltung in der Verfahrrichtung gegen eine Federkraft bewegbar sein. In einer weiteren Ausgestaltung kann der Hydraulikzylinder alternativ oder, wie bevorzugt, kombinativ hierzu auch entgegengesetzt zu der Verfahrrichtung gegen eine Federkraft bewegbar sein. Diesbezüglich können bspw. Tellerfedern oder Tellerfeder-Pakete vorgesehen sein, weiter bspw. in dem Druckraum der Verbindungsaufnahme zur Zusammenwirkung mit dem Formschlussvorsprung des Verbindungsfortsatzes und/oder zwischen dem Hydraulikzylinder und der zugewandten Anschlagfläche des Rumpfgerätes bzw. der Verbindungsaufnahme. Es ist hierdurch ein abgefederter Anschlag ("weicher" Anschlag) in und/oder entgegen Verfahrrichtung gegeben.

Die vorgeschlagene Erfindung kann kombiniert sein mit einer hydraulischen Dämpfung des Hydraulikkolbens gemäß DE 10 2015 119 372.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: ein hydraulisches Arbeitswerkzeug in Längsschnittdarstellung, betreffend eine Einfahrstellung des Hydraulikkolbens, bei Ausgestaltung des Arbeitskopfes als Schneidkopf mit einer Festschneide und einer verlagerbaren Schneide, betreffend eine erste Ausführungsform;
- Fig. 2: die Herausvergrößerung des Bereiches II in Figur 1, betreffend den Zusammenwirkungsbereich eines Elektromotors und eines hierin angeschlossenen Getriebes;
- Fig. 3: eine der Figur 2 entsprechende Darstellung, bei relativ zu dem Elektromotor in Längsachsrichtung bewegten Getriebe;
- Fig. 4: eine im Wesentlichen der Figur 2 entsprechende schematische Schnittdarstellung, betreffend ein Arbeitsgerät mit einem mechanischen Getriebe;
- Fig. 5: eine der Figur 1 entsprechende Darstellung, eine dritte Ausführungsform betreffend;
- Fig. 6: die Herausvergrößerung des Bereiches VI in Figur 5;
- Fig. 7: eine Folgedarstellung zu Figur 6, eine Zwischenstellung im Zuge eines Schneidvorganges betreffend;
- Fig. 8: eine Folgedarstellung zu Figur 7, betreffend eine Bruchsituation im Zuge des Schneidvorganges;
- Fig. 9: eine Folgedarstellung zu Figur 8, betreffend eine Anschlagsituation.

### Beschreibung der Ausführungsformen

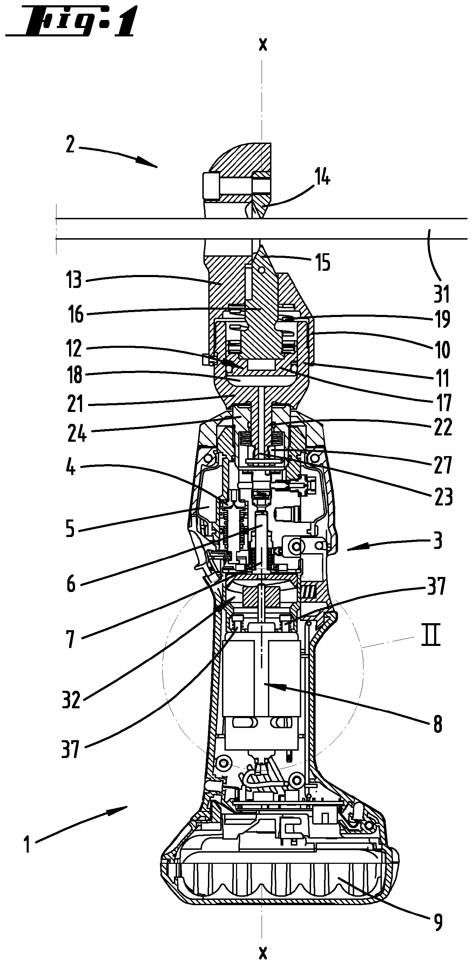

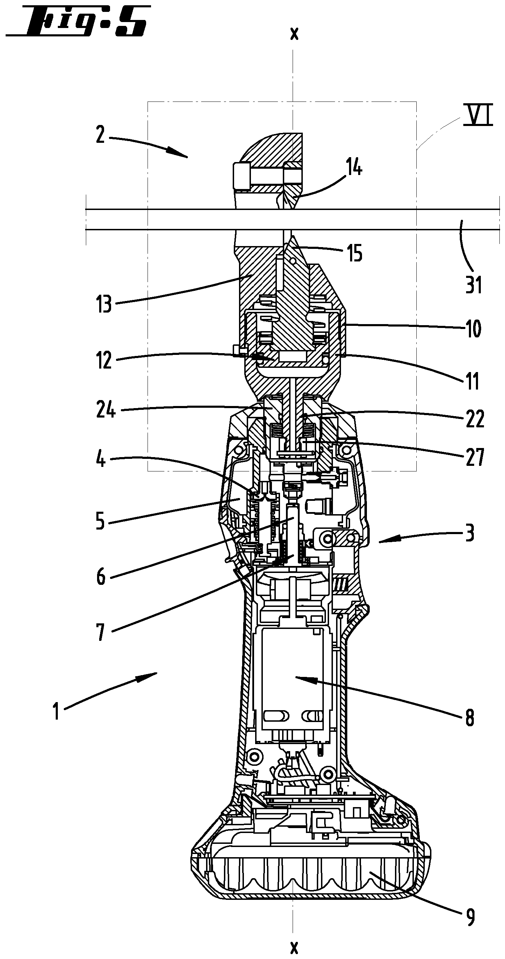

Dargestellt und beschrieben ist, zunächst mit Bezug zu Figur 1 und Figur 5 (betreffend eine weitere Ausführungsform), ein zur Einhandbedienung geeignetes hydraulisches, insbesondere elektrohydraulisches Arbeitswerkzeug 1 zur Betätigung eines Arbeitskopfes 2. Der Arbeitskopf 2 kann, wie dargestellt, als auswechselbar an dem Arbeitswerkzeug 1 halterbarer Kopf ausgebildet sein. Es ist genauso ein nicht lösbar mit dem Werkzeug verbundener Kopf möglich. In dem dargestellten Ausführungsbeispiel ist der Arbeitskopf 2 als Schneidkopf ausgebildet. Es können aber auch an dem Arbeitswerkzeug 1 Arbeitsköpfe 2 in Form von beispielsweise Stanz- oder Pressköpfen angeordnet werden.

Der Arbeitskopf 2 dieser Ausführungsform ist zur hydraulischen Versorgung an ein Rumpfgerät 3 des Arbeitswerkzeuges 1 anschließbar.

Der Arbeitskopf 2 ist bevorzugt und auch bei dem dargestellten Ausführungsbeispiel unterteilt in einen betrieblich lösbar an einem Hydraulikzylinder 11 angebrachten Arbeitsvorsatz und dem bevorzugt betrieblich nicht lösbar an einem Rumpfgerät 3 angebrachten Hydraulikzylinder 11. Der Arbeitsvorsatz umfasst im Wesentlichen einen Hydraulikkolben 12, der mit einem Werkzeug verbunden ist, und das Gegenwerkzeug.

Bei dem hydraulischen Arbeitswerkzeug 1, insbesondere dem Rumpfgerät 3, kann es sich, wie auch bevorzugt, um ein solches Grundgerät handeln, wie es auch in der eingangs zitierten WO 2003/084719 A2 (US 7,412,868 B2) dargestellt und beschrieben ist. Mit Bezug zu der Darstellung in Figur 1 ist in dem oberen Bereich des Rumpfgerätes 3 der Zusammenhang mit dem in der genannten WO-Schrift beschriebenen Gegenstand etwa im Hinblick auf ein Rücklaufventil 4, einen Tank 5 und einen Pumpstößel 6 zu erkennen. In diesem Zusammenhang ist insgesamt auch zu erkennen, dass eine Hydraulikmittelpumpe 7 und ein Antrieb 8 für die Hydraulikmittelpumpe 7 in dem Rumpfgerät 3 in Hintereinanderanordnung vorgesehen sind. Die elektrische Versorgung des Antriebes 8, insbesondere elektromotorischen Antriebs 8 ist gegeben durch Anordnung eines Akkumulators 9.

Im Übrigen wird zur weiteren Erläuterung des bevorzugt hier eingesetzten hydraulischen Arbeitswerkzeuges 1 bzw. Rumpfgerätes 3 auf die genannte WO- bzw. US-Schrift vollinhaltlich Bezug genommen.

Der Arbeitskopf 2 ist in dem dargestellten Ausführungsbeispiel über einen Flansch 10 mechanisch, wie auch hydraulisch mit dem Rumpfgerät 3 verbunden. Der Flansch 10 ist hierzu zunächst zur Schraubverbindung mit einem Hydraulikzylinder 11 für einen Hydraulikkolben 12 ausgebildet. Der Zusammenwirkungsbereich von Rumpfgerät 3 und Arbeitskopf 2 ist im Allgemeinen rotationssymmetrisch zu einer Längsachse x ausgebildet.

Der Flansch 10 umfasst die Wandung des Hydraulikzylinders 11 und geht arbeitskopfseitig in einen bügelförmig ausgebildeten Halter 13 über. An diesem Halter 13 ist in dem dargestellten Ausführungsbeispiel ein Gegenwerkzeug in Form einer Festschneide 14 angeordnet.

Eine weitere, ein Werkzeug bildende bewegliche Schneide 15 ist in Richtung auf die Festschneide 14 vorgelagert angeordnet. Die Schneide 15 ist mit dem Hydraulikkolben 12 gekoppelt, der entsprechend auch Bestandteil des Arbeitskopfes 2 ist.

Die Schneide 15 ist weiter zusammen mit dem Hydraulikkolben 12 bevorzugt entlang der Achse x verlagerbar, entsprechend zwischen einer in der Figur 1 dargestellten Einfahrstellung und einer Ausfahrstellung in einer in Achsrichtung gerichteten Verfahrrichtung r verfahrbar.

Der Hydraulikkolben 12 besitzt einen Kolbenschaft 16 mit einem dem Arbeitsbereich bzw. dem Anschlussbereich der Schneide 15 an dem Kolbenschaft 16 abgewandten tellerförmigen Kolbenkopf 17.

Der Durchmesser des Kolbenkopfes 17 ist angepasst an den Innendurchmesser des aufnehmenden Hydraulikzylinders 11. Der Kolbenkopf 17 formt eine Beaufschlagungsfläche für die im Betrieb des Arbeitswerkzeuges 1 in den vor der Beaufschlagungsfläche zwischen dem Hydraulikzylinder 11 und dem Hydraulikkolben 12 gebildeten Beaufschlagungsraum 18 geförderte Hydraulikflüssigkeit.

Der Hydraulikkolben 12 ist entgegen einer zufolge Druckerhöhung in dem Beaufschlagungsraum 18 gegebenen Verfahrrichtung r in Richtung auf eine Einfahrstellung gemäß der Figur 1 belastet. Hierzu ist eine Feder 19 vorgesehen, bspw. eine Zylinderdruckfeder. Die Feder 19 stützt sich einerends im Bereich des Halters 13 an dem Arbeitskopf 2 ab und wirkt anderenends auf den Kolbenschaft 16 ein.

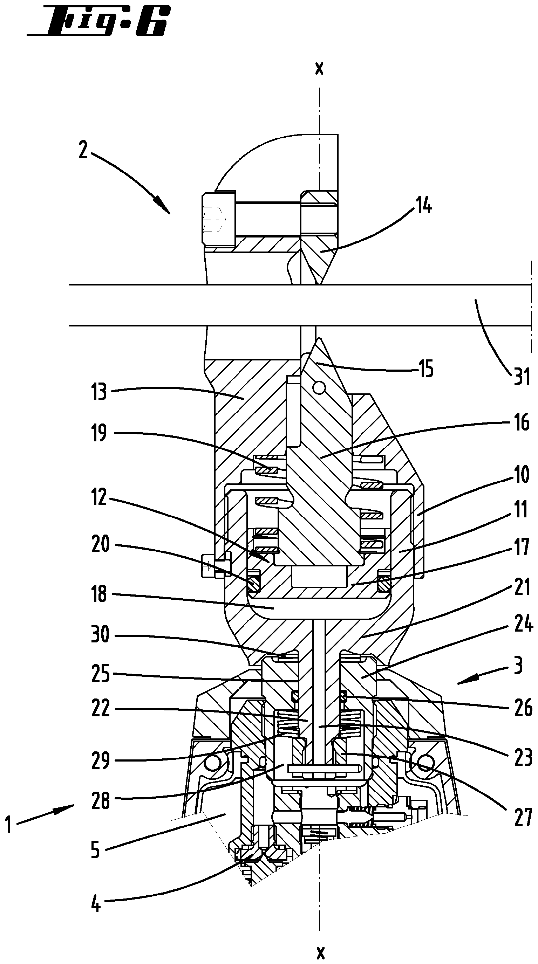

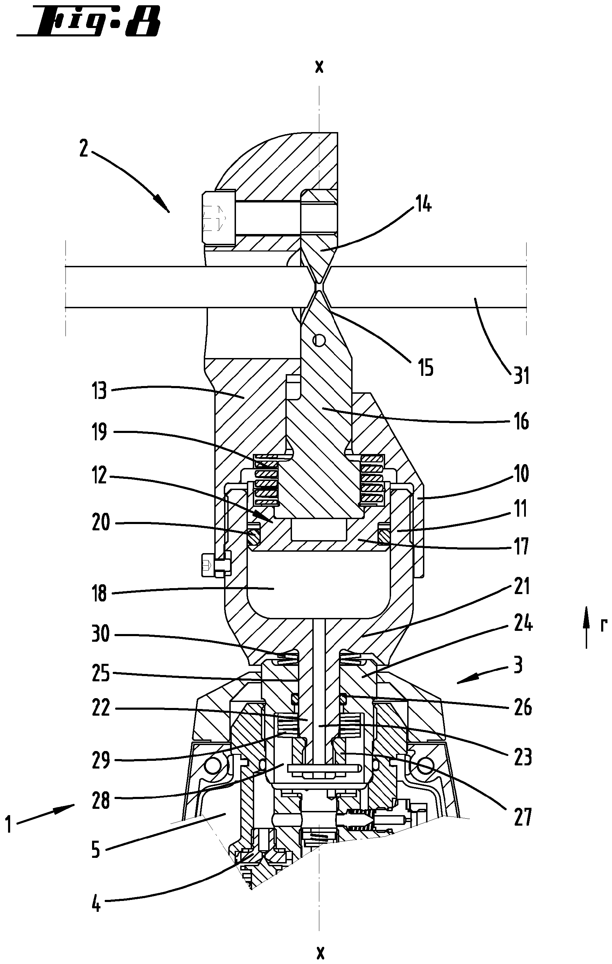

Der Hydraulikkolben 12 ist umfangsseitig mit einer umlaufenden Ringdichtung 20 versehen. Diese wirkt gegen die Innenfläche der Hydraulikzylinderwandung (siehe auch Figuren 6 bis 9).

Von dem Zylinderboden 21 des Hydraulikzylinders 11 ausgehend erstreckt sich entgegengesetzt zu der Zylinderwandung ein Verbindungsfortsatz 22. Dieser etwa dornartig ausgebildete Verbindungsfortsatz 22 ist bevorzugt mittig des Zylinderbodens 21 angeordnet, weiter bevorzugt im Nutzungszustand die Achse x mittig aufnehmend. Der Verbindungsfortsatz 22 kann, wie dargestellt, materialeinheitlich und einstückig mit dem Hydraulikzylinder 11 ausgebildet sein.

Zentral ist der Verbindungsfortsatz 22 in Erstreckungsrichtung der Achse x durchsetzt von einem Hydraulikmittelkanal 23, welcher einerends in dem Beaufschlagungsraum 18 mündet und anderenends in der freien Stirnfläche des Verbindungsfortsatzes 22.

Mittels des Verbindungsfortsatzes 22 ist der Hydraulikzylinder 11 und hierüber der gesamte Arbeitskopf 2 in einer adapterteilartigen Verbindungsaufnahme 24 des Rumpfgerätes 3 aufgenommen. Die Verbindungsaufnahme 24 ist im Betriebszustand des Arbeitswerkzeuges 1 nicht verlagerbar in dem Rumpfgerät 3 gehaltert, bspw. zufolge einer Schraubbefestigung.

Der Verbindungsfortsatz 22 durchsetzt die Verbindungsaufnahme 24 im Bereich einer querschnittsangepassten, jedoch die relative Verlagerbarkeit des Verbindungsfortsatzes 22 in Verfahrrichtung r erlaubenden Aufnahmeöffnung 25. Im Bereich dieser Aufnahmeöffnung 25 ist eine Dichtung 26, bspw. in Form einer Ringdichtung, vorgesehen. Das von dem Hydraulikzylinder 11 jenseits der Dichtung 26 ausgebildete freie Ende des Verbindungsfortsatzes 22 ist mit einem Formschlussvorsprung 27, bspw. in Form eines an dem Verbindungsfortsatz 22 angreifenden Klauenteils, versehen. Der Formschlussvorsprung 27 erstreckt sich in einem gegenüber dem Querschnitt des Verbindungsfortsatzes 22 sowie der Aufnahmeöffnung 25 quer zur Erstreckungsrichtung der Achse x querschnittsvergrößerten Druckraum 28.

In diesen Druckraum 28 liefert die Hydraulikmittelpumpe 7 Hydraulikmittel und über den sich in diesen Druckraum 28 öffnenden Hydraulikmittelkanal 23 weiter in den Beaufschlagungsraum 18 zur Beaufschlagung des Hydraulikkolbens 12.

Neben dem Elektromotor 8 verfügt das Rumpfgerät 3 weiter über ein Getriebe 32, wobei bezogen auf die Längsachse x der Elektromotor und das Getriebe 32 in Hintereinanderreihung angeordnet sind. In dem in den Figuren 1 bis 3 dargestellten ersten Ausführungsbeispiel ist das Getriebe 32 als Hydraulikpumpe ausgebildet.

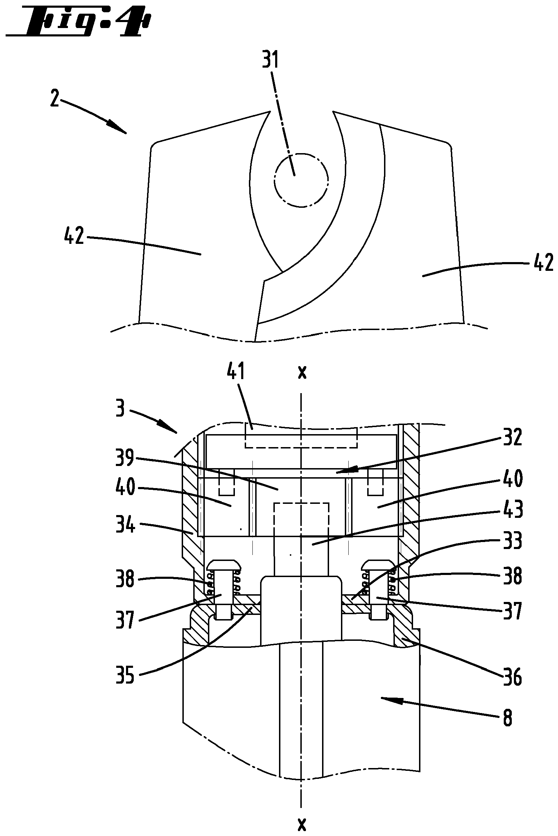

Gemäß dem in Figur 4 dargestellten zweiten Ausführungsbeispiel ist das Getriebe 32 ein mechanisches Getriebe, weiter hier ein sogenanntes Planetengetriebe, mit einem unmittelbar über den Elektromotor 8 angetriebenen Sonnenrad 39, das mit radial außen angeordneten Planetenrädern 40 kämmt. Über die Planetenräder 40 wird in dieser Ausführungsform eine Spindel 41 drehangetrieben. Diese kann, wie auch bevorzugt, in Erstreckungsrichtung der Längsachse x verlaufen.

Ein derart ausgebildetes Rumpfgerät 3 kann beispielsweise zum Antrieb eines Arbeitskopfes 2 mit verschwenkbaren Schneiden 42 dienen. Ein solches Arbeitswerkzeug ist im Wesentlichen aus der eingangs erwähnten WO 2014/009363 A1 bekannt.

Unabhängig von der Ausführungsform (hydraulisch oder mechanisch wirksames Getriebe 32) verfügt das Getriebe 32 über ein umlaufendes Gehäuse 34 und der zugeordnete Elektromotor 8 über ein bevorzugt ebenso umlaufendes Gehäuse 36.

Das Getriebe 32 und der Elektromotor 8 sind über eine Zapfenverbindung miteinander verbunden, wobei eine Relativbeweglichkeit des Getriebes 32 zu dem Elektromotor 8 in Erstreckungsrichtung der Längsachse x gegeben ist.

Hierzu sind in dem dargestellten Ausführungsbeispiel in der Decke 35 des Elektromotor-Gehäuses 36 zwei mit Bezug zu der Längsachse x diametral gegenüberliegend angeordnete Zapfen 37 in Form von Schrauben verankert. Die Zapfen durchsetzen den zugeordneten Gehäuseboden 33 des Getriebes 32 im Bereich entsprechend positionierter und dimensionierter Bohrungen.

Das Getriebe 32 ist an dem den Boden 33 durchsetzenden Zapfen 37 in Längsrichtung der Achse x geführt.

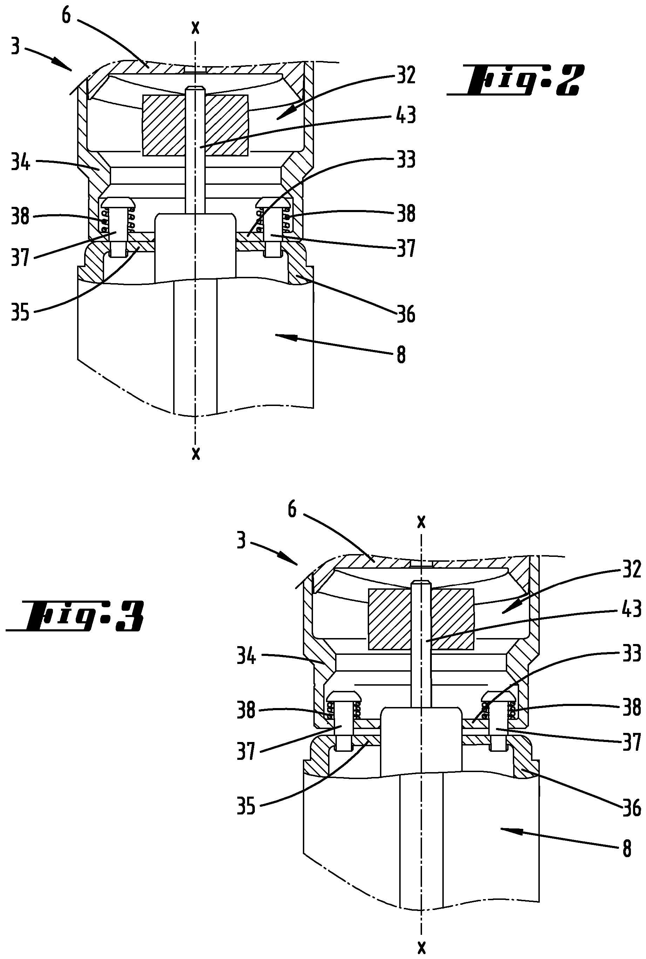

In einer unbeeinflussten Grundstellung gemäß den Darstellungen in den Figuren 2 und 4 liegt der Gehäuseboden 33 des Getriebes 32 bevorzugt anschlagbegrenzt an der Decke 35 des Elektromotors 8 an. Die Antriebswelle 43 des Elektromotors 8 durchsetzt ebenfalls die Decke 35 sowie den Boden 33 des Getriebes 32 zum Eingriff in den Getriebebereich.

Im Moment der vollständigen Durchtrennung eines Schneidguts 31 oder bei einem Sprödbruch des Schneidgutes 31 kann es über die linear hintereinander sich ergebende Anordnung der Baugruppen zu einer schlagartigen Belastung insbesondere des Elektromotors und/oder des Getriebes kommen, was bis hin zu einem Ausfall führen kann.

Um einer solchen Belastung des Getriebes 32 und/oder des Elektromotors 8 entgegenzuwirken, ist eine relative Beweglichkeit des Getriebes 32 zu dem Elektromotor 8 in Erstreckungsrichtung der Längsachse x ermöglicht. Diese ist gegeben zufolge der vorgesehenen Zapfen 37, deren Zapfenköpfe in das Gehäuseinnere des Getriebes 32 einragend in Achsrichtung so zu der zugewandten Oberfläche des Gehäusebodens 33 des Getriebes 32 beabstandet sind, dass eine entsprechende Verlagerbarkeit ermöglicht ist.

Zwischen jedem Zapfenkopf und dem zugewandten Gehäuseboden 33 des Getriebes 32 ist eine Feder 38 vorgesehen, beispielsweise, wie auch dargestellt, eine Zylinderdruckfeder, die den Zapfen 37 umgibt.

Figur 3 zeigt beispielhaft bei einer hydraulisch wirkenden Kupplung 32 eine Zwischenstellung im Zuge einer Relativverlagerung von Elektromotor 8 und Getriebe 32.

Diese Verlagerung erfolgt entsprechend entgegen der Kraft der das Getriebe 32 wieder in die Grundstellung zurückverlagernden Federn 38.

Der Hydraulikzylinder 11 kann mittels des Verbindungsfortsatzes 22 in der Verbindungsaufnahme 24 und somit relativ zu dem Rumpfgerät 3 in Erstreckungsrichtung der Achse x und somit weiter in Verfahrrichtung r wie auch entgegengesetzt zu der Verfahrrichtung r anschlagbegrenzt bewegbar sein (siehe weitere Ausführungsform der Figuren 6 bis 9). Die Anschlagbegrenzung in Verfahrrichtung r ist gegeben zufolge Zusammenwirkung des fortsatzseitigen Formschlussvorsprunges 27 mit der Verbindungsaufnahme 24. Entgegen der Verfahrrichtung r ist eine Anschlagbegrenzung gegeben zufolge Zusammenwirkung von Hydraulikzylinder 11, insbesondere Zylinderboden 21 und der zugewandten Stirnfläche des Rumpfgerätes 3, insbesondere der Verbindungsaufnahme 24. Es kann sich so eine Bewegbarkeit entlang der Achse x von 1 mm oder mehr, bspw. 3 bis 6 mm ergeben.

In bevorzugter, wie auch dargestellter, Ausgestaltung ist der jeweilige Anschlag abgefedert. Hierzu ist bspw. zwischen dem Formschlussvorsprung 27 und der zugewandten Fläche der Verbindungsaufnahme 24 in dem Druckraum 28 eine bspw. den Verbindungsfortsatz 22 umfassende Feder 29 vorgesehen. Es kann sich hierbei z.B. um eine Zylinder-Druckfeder oder ein Tellerfeder-Paket handeln.

Eine weitere Feder 30, die auch bspw. als Zylinder-Druckfeder oder als Tellerfeder-Paket ausgebildet sein kann, ist zwischen dem Zylinderboden 21 und der zugewandten Stirnfläche der Verbindungsaufnahme 24 angeordnet, hierbei den Verbindungsfortsatz 22 umgreifend.

Die Darstellungen in den Figuren 6 bis 9 zeigen eine Abfolge im Zuge eines Schneidvorganges. Das Schneidgut 31 in Form eines Drahtes erstreckt sich zwischen der Festschneide 14 und der verlagerbaren Schneide 15.

In der in Figur 6 dargestellten, hydraulisch unbelasteten Einfahrstellung des Hydraulikkolbens 12 befindet sich der Hydraulikzylinder 11 in einer Anschlagstellung zum Rumpfgerät 3, insbesondere zu der Verbindungsaufnahme 24.

Mit Aktivierung der Hydraulikmittelpumpe 7 und der damit einhergehenden Förderung von Hydraulikmittel in den Beaufschlagungsraum 18 ergibt sich eine Verlagerung des Hydraulikkolbens 12 und über diesen der Schneide 15 in Verfahrrichtung r.

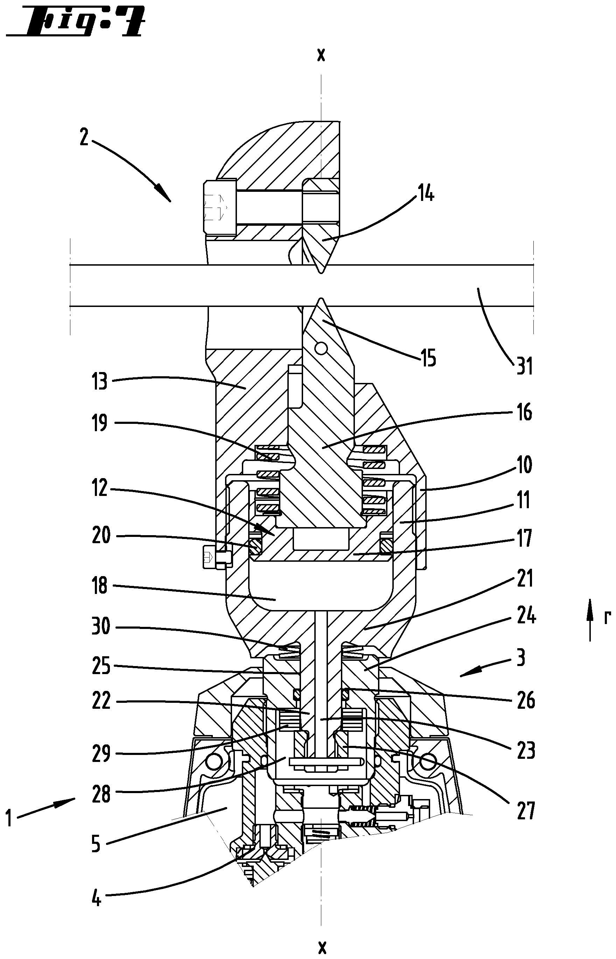

Im Zuge des Druckaufbaus bewegt sich auch der Hydraulikzylinder 11 mitsamt dem Arbeitskopf 2 in Verfahrrichtung r unter Überwindung der Rückstellkraft der Feder 29, ggf. bis hin in eine (mittelbare) Anschlagstellung zwischen dem Formschlussvorsprung 27 und der Verbindungsaufnahme 24 unter Stauchung der Feder 29 (vgl. Figur 7).

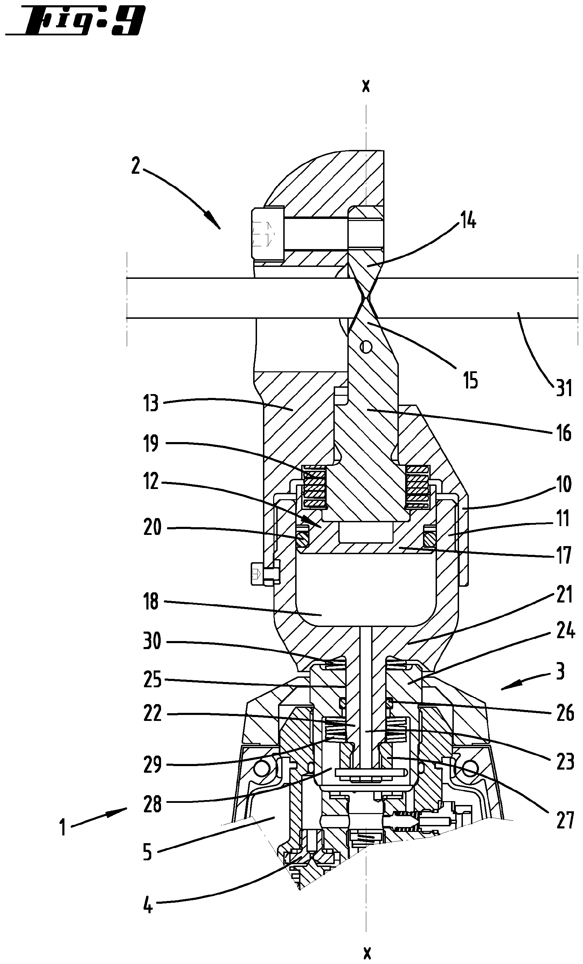

Mit Fortfall der Gegenkraft an dem Schneidgut 31 bei Durchtrennung des Schneidguts 31 oder bei einem Sprödbruch desselben vollzieht der Hydraulikkolben 12 zusammen mit der daran befestigten Schneide 15 aufgrund des hohen zuvor wirkenden Druckes eine plötzliche Bewegung in Verfahrrichtung r auf die gegenüberliegende Festschneide 14 zu. Hierbei kann es zu einem Zusammenprall der Schneiden 14 und 15 gemäß der Darstellung in Figur 9 kommen. Bevorzugt wird aber vor Erreichen eines Zusammenpralls der Schneiden ein Anschlag des Kolbenschaftes 16 an dem Halter 13 erreicht.

Aufgrund des weiterhin in dem Hydraulikzylinder 11 jedenfalls kurzzeitig noch herrschenden hohen Hydraulikdruckes kommt es auch zu einer Bewegungstendenz des Hydraulikzylinders 11 entgegen der Verfahrrichtung r in Richtung auf das Rumpfgerät 3. Es kommt schließlich nach dem Zusammenprall der Schneiden zu einem Anschlag des Arbeitskopfes 2 über den Hydraulikzylinder 11 an die zugewandte Stirnfläche des Rumpfgerätes 3, diese bevorzugt unter Komprimierung der zwischengeschalteten Feder 30.

## Patentansprüche

1. Arbeitswerkzeug (1) mit einem Arbeitskopf (2) und einem Rumpfgerät (3), wobei in dem Rumpfgerät (3) ein Elektromotor (8) und ein Getriebe (32), die miteinander verbunden sind, angeordnet sind, wobei weiter der Elektromotor (8) eine Antriebswelle (43) mit einer Längsachse (x) aufweist und das Getriebe (32) mit dem Elektromotor (8) in Richtung der Längsachse (x) anschlagbegrenzt beweglich verbunden ist, **dadurch gekennzeichnet, dass** in einer unbeeinflussten Grundstellung ein Gehäuseboden (33) eines Gehäuses (34) des Getriebes (32) anschlagbegrenzt an einer Decke (35) eines Gehäuses (36) des Elektromotors (8) anliegt und dass eine Antriebswelle (43) des Elektromotors (8) die Decke (35) sowie den Boden (33) zum Eingriff in den Getriebebereich durchsetzt.

2. Arbeitswerkzeug (1) nach Anspruch 1, **dadurch gekennzeichnet, dass** die Verbindung durch einen in einem der Teile (8, 32) verankerten Zapfen (37) gegeben ist, gegenüber welchem das andere Teil (8, 32) anschlagbegrenzt gegen eine Federkraft einer Feder (38) beweglich ist, wobei das Getriebe (32) an dem den Boden (33) durchsetzenden Zapfen (37) in Längsrichtung der Achse (x) geführt ist, und dass die Bewegbarkeit gegen eine Federkraft einer Feder (38) gegeben ist.

3. Arbeitswerkzeug nach Anspruch 1, **dadurch gekennzeichnet, dass** die Verbindung durch eine in einem der Teile (8, 32) verankerten Zapfen (37) gegeben ist, gegenüber welchem das andere Teil (8, 32) anschlagbegrenzt beweglich ist.

4. Arbeitswerkzeug nach einem der Ansprüche 1 oder 3, **dadurch gekennzeichnet, dass** die Bewegbarkeit gegen eine Federkraft einer Feder (38) gegeben ist.

5. Arbeitswerkzeug nach Anspruch 2 oder Anspruch 4, **dadurch gekennzeichnet, dass** die Feder (38) zwischen einem Zapfenkopf und dem Gehäuse (34, 36) eines der Teile (8, 32) wirkt.

6. Arbeitswerkzeug nach Anspruch 5, **dadurch gekennzeichnet, dass** der Zapfen (37) eine Schraube ist.

7. Hydraulisches Arbeitswerkzeug (1) mit einem Arbeitskopf (2) und einem Rumpfgerät (3), wobei der Arbeitskopf (2) einen Hydraulikzylinder (11) mit einem Hydraulikkolben (12) aufweist, der zwischen einer Einfahrstellung und einer Ausfahrstellung in einer Verfahrrichtung (r) verfahrbar ist, wobei darüber hinaus in dem Rumpfgerät (3) eine Hydraulikmittelpumpe (7) und ein Antrieb (8) für die Hydraulikmittel-pumpe (7) vorgesehen ist, **dadurch gekennzeichnet, dass** der Hydraulikzylinder (11) in der Verfahrrichtung (r) anschlagbegrenzt bewegbar an dem Rumpfgerät (3) angebracht ist.

8. Hydraulisches Arbeitswerkzeug nach Anspruch 7, **dadurch gekennzeichnet, dass** die Hydraulikmittelpumpe (7) und/oder der Antrieb (8) für die Hydraulikmittelpumpe (7) in dem Rumpfgerät (3) in Hintereinanderanordnung vorgesehen sind und dass der Hydraulikzylinder (11) in Richtung der Hintereinanderanordnung bewegbar ist.

9. Hydraulisches Arbeitswerkzeug nach einem der Ansprüche 7 oder 8, **dadurch gekennzeichnet, dass** der Hydraulikzylinder (11) in der Verfahrrichtung (r) 1mm oder mehr bewegbar ist.

10. Hydraulisches Arbeitswerkzeug nach einem der Ansprüche 7 bis 9, **dadurch gekennzeichnet, dass** der Hydraulikzylinder (11) einen sich von dem Zylinderboden (21) entgegengesetzt zu der Zylinderwandung erstreckenden Verbindungsfortsatz (22) aufweist, mit welchem der Hydraulikzylinder (11) bewegbar in einer Verbindungsaufnahme (24) des Rumpfgerätes (3) aufgenommen ist.

11. Hydraulisches Arbeitswerkzeug nach Anspruch 10, **dadurch gekennzeichnet, dass** der Verbindungsfortsatz (22) eine Dichtung (26) in dem Rumpfgerät (3) durchsetzt.

12. Hydraulisches Arbeitswerkzeug nach Anspruch 11, **dadurch gekennzeichnet, dass** der Verbindungsfortsatz (22) gesehen von dem Hydraulikzylinder (11) jenseits der Dichtung (26) mit einem Formschlussvorsprung (27) ausgebildet ist.

13. Hydraulisches Arbeitswerkzeug nach Anspruch 12, **dadurch gekennzeichnet, dass** der Formschlussvorsprung (27) durch ein an dem Verbindungsfortsatz (22) angreifendes Klauenteil gebildet ist.

14. Hydraulisches Arbeitswerkzeug nach einem der Ansprüche 7 bis 13, **dadurch gekennzeichnet, dass** der Hydraulikzylinder (11) in der Verfahrrichtung (r) gegen eine Federkraft bewegbar ist.

15. Hydraulisches Arbeitswerkzeug nach einem der Ansprüche 7 bis 14, **dadurch gekennzeichnet, dass** der Hydraulikzylinder (11) entgegengesetzt zu der Verfahrrichtung (r) gegen eine Federkraft bewegbar ist.

## Claims

1. A working tool (1) with a working head (2) and a body device (3), wherein an electric motor (8) and a transmission (32), which are connected to one another, are arranged in the body device (3), and wherein the electric motor (8) additionally comprises a driveshaft (43) with a longitudinal axis (x) and the transmission (32) is connected to the electric motor (8) so as to be movable in the direction of the longitudinal axis (x) in such a way that its motion is limited by a limit stop, **characterized in that** a housing bottom (33) of a housing (34) of the transmission (32) abuts in an unaffected home position on a ceiling (35) of a housing (36) of the electric motor (8) in such a way that its motion is limited by a limit stop, and **in that** a driveshaft (43) of the electric motor (8) extends through the ceiling (35), as well as the bottom (33), in order to engage into the transmission region.

2. The working tool (1) according to claim 1, **characterized in that** the connection is realized by means of a pin (37), which is anchored in one of the components (8, 32) and relative to which the other component (8, 32) is movable against a spring force of a spring (38) in such a way that its motion is limited by a limit stop, wherein the transmission (32) is guided in the longitudinal direction of the axis (x) on the pin (37) extending through the bottom (33), and **in that** the moveability is realized against a spring force of a spring (38).

3. The working tool according to claim 1, **characterized in that** the connection is realized by means of a pin (37), which is anchored in one of the components (8, 32) and relative to which the other component (8, 32) is movable in such a way that its motion is limited by a limit stop.

4. The working tool according to one of claims 1 or 3, **characterized in that** the moveability is realized against a spring force of a spring (38).

5. The working tool according to claim 2 or claim 4, **characterized in that** the spring (38) acts between a pin head and the housing (34, 36) of one of the components (8, 32).

6. The working tool according to claim 5, **characterized in that** the pin (37) is a screw.

7. A hydraulic working tool (1) with a working head (2) and a body device (3), wherein the working head (2) comprises a hydraulic cylinder (11) with a hydraulic piston (12), which can be displaced between a retracted position and an extended position in a direction of travel (r), and wherein a hydraulic medium pump (7) and a drive (8) for the hydraulic medium pump (7) are additionally provided in the body device (3), **characterized in that** the hydraulic cylinder (11) is attached to the body device (3) so as to be movable in the direction of travel (r) in such a way that its motion is limited by a limit stop.

8. The hydraulic working tool according to claim 7, **characterized in that** the hydraulic medium pump (7) and/or the drive (8) for the hydraulic medium pump (7) are arranged in the body device (3) in the form of a successive arrangement, and **in that** the hydraulic cylinder (11) is movable in the direction of the successive arrangement.

9. The hydraulic working tool according to one of claims 7 or 8, **characterized in that** the hydraulic cylinder (11) is movable in the direction of travel (r) by 1 mm or more.

10. The hydraulic working tool according to one of claims 7 to 9, **characterized in that** the hydraulic cylinder (11) comprises a connecting extension (22), which extends from the cylinder bottom (21) opposite to the cylinder wall, wherein the hydraulic cylinder (11) is movably accommodated in a connecting receptacle (24) of the body device (3) by means of said connecting extension.

11. The hydraulic working tool according to claim 10, **characterized in that** the connecting extension (22) extends through a seal (26) in the body device (3).

12. The hydraulic working tool according to claim 11, **characterized in that** the connecting extension (22) is realized with a form-fit projection (27), which is viewed from the hydraulic cylinder (11) arranged on the other side of the seal (26).

13. The hydraulic working tool according to claim 12, **characterized in that** the form-fit projection (27) is realized in the form of a claw part engaging on the connecting extension (22).

14. The hydraulic working tool according to one of claims 7 to 13, **characterized in that** the hydraulic cylinder (11) is movable in the direction of travel (r) against a spring force.

15. The hydraulic working tool according to one of claims 7 to 14, **characterized in that** the hydraulic cylinder (11) is movable opposite to the direction of travel (r) against a spring force.

## Revendications

1. Outil de travail (1) avec une tête de travail (2) et un dispositif de corps (3), dans lequel un moteur électrique (8) et une transmission (32), qui sont reliés entre eux, sont agencés dans le dispositif de corps (3), dans lequel en outre le moteur électrique (8) présente un arbre d'entrainement (43) avec un axe longitudinal (x) et la transmission (32) est reliée au moteur électrique (8) de manière à être mobile dans la direction de l'axe longitudinal (x) de façon limitée par butée(s), **caractérisé en ce que**, dans une position de base non influencée, un fond de boîtier (33) d'un boîtier (34) de la transmission (32) est en appui de limitation par butée contre un plafond (35) d'un boîtier (36) du moteur électrique (8) et **en ce qu'**un arbre d'entraînement (43) du moteur électrique (8) traverse le plafond (35) et le fond (33) pour engagement dans la région de transmission.

2. Outil de travail (1) selon la revendication 1, **caractérisé en ce que** la liaison est assurée par une broche (37) fixée dans l'une des pièces (8, 32), par rapport à laquelle l'autre pièce (8, 32) est mobile de manière limitée par butée à l'encontre d'une force élastique d'un ressort (38), dans lequel la transmission (32) est guidée dans la direction longitudinale de l'axe (x) sur la broche (37) traversant le fond (33) et **en ce que** la mobilité est fournie à l'encontre d'une force élastique d'un ressort (38).

3. Outil de travail selon la revendication 1, **caractérisé en ce que** la liaison est assurée par un axe (37) fixé dans l'une des pièces (8, 32), par rapport auquel l'autre pièce (8, 32) est mobile de manière limitée par butée(s).

4. Outil de travail selon l'une des revendications 1 ou 3, **caractérisé en ce que** la mobilité est fournie à l'encontre d'une force élastique d'un ressort (38).

5. Outil de travail selon la revendication 2 ou la revendication 4, **caractérisé en ce que** le ressort (38) agit entre une tête de broche et le boîtier (34, 36) de l'une des pièces (8, 32).

6. Outil de travail selon la revendication 5, **caractérisé en ce que** la broche (37) est une vis.

7. Outil de travail hydraulique (1) avec une tête de travail (2) et un dispositif de corps (3), dans lequel la tête de travail (2) présente un cylindre hydraulique (11) avec un piston hydraulique (12) qui est déplaçable entre une position rétractée et une position déployée dans une direction de déplacement (r), dans lequel, en outre, une pompe à fluide hydraulique (7) et un entraînement (8) pour la pompe à fluide hydraulique (7) sont prévus dans le dispositif de corps (3), **caractérisé en ce que** le vérin hydraulique (11) est joint au dispositif de corps (3) de manière à être déplaçable dans la direction de déplacement (r) de de façon limitée par butée(s).

8. Outil de travail hydraulique selon la revendication 7, **caractérisé en ce que** la pompe à fluide hydraulique (7) et/ou l'entraînement (8) pour la pompe à fluide hydraulique (7) sont prévus dans le dispositif de corps (3) dans un agencement l'un derrière l'autre et **en ce que** le cylindre hydraulique (11) est mobile dans la direction de l'agencement l'un derrière l'autre.

9. Outil de travail hydraulique selon l'une des revendications 7 ou 8, **caractérisé en ce que** le cylindre hydraulique (11) est mobile de 1 mm ou plus dans la direction de déplacement (r).

10. Outil de travail hydraulique selon l'une des revendications 7 à 9, **caractérisé en ce que** le cylindre hydraulique (11) présente un prolongement de raccordement (22) s'étendant à partir du fond de cylindre (21) à l'opposé de la paroi de cylindre, avec lequel le cylindre hydraulique (11) est reçu de manière mobile dans un moyen de réception de raccordement (24) du dispositif de corps (3).

11. Outil de travail hydraulique selon la revendication 10, **caractérisé en ce que** le prolongement de raccordement (22) passe à travers un joint (26) dans le dispositif de corps (3).

12. Outil de travail hydraulique selon la revendication 11, **caractérisé en ce que** le prolongement de raccordement (22), vu du cylindre hydraulique (11), est formé avec une saillie de verrouillage positif (27) de l'autre côté du joint (26).

13. Outil de travail hydraulique selon la revendication 12, **caractérisé en ce que** la saillie de verrouillage positif (27) est formée par une pièce de crabotage s'engageant sur le prolongement de raccordement (22).

14. Outil de travail hydraulique selon l'une des revendications 7 à 13, **caractérisé en ce que** le cylindre hydraulique (11) est mobile dans la direction de déplacement (r) à l'encontre d'une force élastique.

15. Outil de travail hydraulique selon l'une des revendications 7 à 14, **caractérisé en ce que** le cylindre hydraulique (11) est mobile dans la direction opposée à la direction de déplacement (r) à l'encontre d'une force élastique.
